# EUROPEAN PATENT APPLICATION

(11) **EP 4 318 695 A1**
(43) Date of publication of application: **07.02.2024**
(21) Application number: 22188439.8
(22) Date of filing: 03.08.2022
(51) Int. Cl.: H01M 8/248, H01M 16/00

(54) **END PLATE FOR CLAMPING ONE OR MORE FUEL CELLS IN A FUEL CELL ARRANGEMENT**

(71) Applicant: Airbus Operations GmbH, 21129 Hamburg (DE)
(72) Inventor: Linde, Peter, 21129 Hamburg (DE); Hegenbart, Matthias, 21129 Hamburg (DE)
(74) Representative: KASTEL Patentanwälte PartG mbB

(57) **Abstract**

The invention provides an end plate (44) for clamping one or more fuel cells (10) in a fuel cell arrangement (40), the end plate (44) including one or more integrated storage device (62) for storing electrical energy. The invention further provides a fuel cell arrangement (40) including one or more fuel cells (10) and a clamp device (42) for clamping the one or more fuel cells (10), the clamp device (42) having an end plate (44) including one or more integrated storage device (62) for storing electrical energy, the end plate (44) clamping the one or more fuel cells (10) in the fuel cell arrangement (40).

## Description

The invention relates to an end plate for clamping one or more fuel cells in a fuel cell arrangement. The invention further relates to a fuel cell arrangement.

In order to realize emission free aircraft propulsion, fuel cells have emerged as a promising alternative. A fuel cell, for instance a proton exchange membrane (PEM) fuel cell, converts the chemical energy of a fuel, for instance hydrogen, and an oxidizing agent into electricity. The fuel for a fuel cell may be provided in form of a cryogenic liquefied gas. At a cold start, the fuel cell needs a considerable amount of time in order to reach an operating temperature. While electric engines are able to deliver their specified torque very quickly even at a cold start, a fuel cell will need more time to reach the operating temperature.

The object of the invention is to provide a device for improving the cold start behaviour of a fuel cell arrangement.

To achieve this object, the invention provides an end plate according to claim 1. A fuel cell arrangement is subject-matter of the parallel claim.

Advantageous embodiments of the invention are subject-matter of the dependent claims.

In one aspect, the invention provides an end plate for clamping one or more of fuel cells in a fuel cell arrangement, the end plate including one or more integrated storage devices for storing electrical energy.

Preferably, the end plate is made of a carbon fiber reinforced polymer.

Preferably, the integrated storage device includes two electrode plies separated by a separator ply.

Preferably, at least one of the electrode plies include one or more carbon fibers.

Preferably, the one or more carbon fibers are coated with a compound of lithium ions.

Preferably, the separator ply includes a glass fiber reinforced polymer.

Preferably, an electrically conductive current collector is connected to at least one of the electrode plies for collecting current from the electrode ply.

Preferably, the end plate includes a plurality of integrated storage devices.

Preferably, electrically conductive current collectors are arranged between adjacent integrated storage devices.

Preferably, the electrically conductive current collectors are respectively connected to electrode plies of adjacent integrated storage devices.

Preferably, the plurality of integrated storage devices and the electrically conductive current collectors are enclosed by a glass faber reinforced polymer.

Preferably, at least one surface of the end plate includes one or more gas diffusion channels for diffusing gas in a fuel cell.

In another aspect, the invention provides a fuel cell arrangement including one or more fuel cells and a clamp device for clamping the one or more fuel cells, the clamp device having an end plate according to any of the preceding embodiments, the end plate clamping the one or more fuel cells.

Preferably, the one or more fuel cells respectively includes a heating device producing heat when fed with electrical energy.

Preferably, the heating device includes a heating spiral attached to a perimeter of a bipolar plate of the one or more fuel cells.

Preferably, the end plate is configured to feed the heating device with electrical energy stored in the integrated storage device.

Preferably, the end plate is configured to assist the one or more fuel cells in operating an electrical consumer.

Preferably, the one or more fuel cells are electrically connected to the end plate for charging the integrated storage device with electrical energy produced in the fuel cell.

Preferably, the one or more integrated storage devices and the heating device of the one or more fuel cells are electrically connected to a first electronic controlling switch and/or the one or more integrated storage devices and the heating device of the one or more fuel cells build a first electrical circuit.

Preferably, the one or more fuel cells are connected to a second electronic switch and/or the one or more fuel cells build a second electrical circuit.

Preferably, the first electronic switch is electrically connected to the second electronic switch and/or the first electrical circuit is electrically connected to the second electrical circuit.

Preferably, the second electronic switch is connected to an electrical consumer and/or the first electrical circuit and the second electrical circuit are electrically connected to the electrical consumer.

Preferably, the clamp device includes two end plates according to any of the preceding embodiments, the one or more fuel cells being clamped between the two end plates.

Preferably, the clamp device includes a tension rod, the tension rod connecting the end plates and/or penetrating through a through-hole of each of the end plates.

In another aspect, the invention provides an aircraft including the end plate and/or the fuel cell arrangement according to any of the preceding embodiments.

Embodiments of the invention preferably have one, several or all of the following advantages and effects:
- the structural batteries can be integrated in the end plates and do not cause any significant added weight nor added space;
- the structural batteries, i.e., the integrated storage devices, can improve the cold start of the fuel cell stack, i.e., the plurality of fuel cells, by powering heating devices, e.g., heating spirals;
- the structural batteries can provide faster response when demanded from the fuel cell stack (H₂ and O₂ pressure else only practical means);
- the structural batteries can assist the fuel cell stack by adding power level on top at limited durations (power injection). This reduces dimensions and weight of the fuel cell stack;
- the very short distance from the structural batteries to heating spirals or power assist means minimized resistance losses;
- when the aircraft is at ground, the structural batteries can be recharged with green energy and/or in flight by the fuel cell stack (when high demand);

Preferred embodiments may include one, several or all of the following technical means:
- multiple composite structural battery plies integrated in end plates;
- wiring for structural battery;
- controllers/switches for operation mode;
- temperature gauges;
- fuel cell stack;
- heating spirals or other heating devices.

Preferred embodiments may include one, several or all of the following method steps:
- assembly of technical means;
- charging structural batteries;
- at cold start, the structural batteries power the heating spirals which shorten the time to reach the operating temperature;
- at operating temperature, when a demand rises for fast increased power, the structural batteries provide faster power than the fuel cell stack can achieve (by increased reactant pressure);
- at operating temperature, when a demand rises for a power level higher than what can be achieved by the fuel cell stack, the structural batteries can supplement the fuel cell stack with power ("power injection");
- when the aircraft is at ground, the structural batteries can be recharged by green energy;
- in-flight recharging can take place by the fuel cell stack at times of no peak demand.

Preferred embodiments of the invention provide structural batteries integrated in an end plate of a fuel cell arrangement. The end plate may be made of a carbon fiber reinforced polymer. The end plate may be configured for providing direct energy to heating devices such as heating spirals for improved cold start as well as for providing extra electrical energy on top of the one produced by the fuel cells ("power injection" at peak loads).

Preferred embodiments of the invention have the advantage that the dimension of the fuel cell stack can be reduced which saves weight and volume. The minimized distance from the structural batteries to the consumers may help minimize electrical resistance losses.

Embodiments of the invention are now explained in more detail with reference to the accompanying drawings of which
- Fig. 1: shows a comparative embodiment of a fuel cell;
- Fig. 2: shows a comparative embodiment of a fuel cell arrangement;
- Fig. 3: shows the fuel cell arrangement according to an embodiment of the invention;
- Fig. 4: shows a portion of an end plate having a plurality of integrated storage devices according to an embodiment of the invention;
- Fig. 5: shows one of the plurality of integrated storage devices;
- Fig. 6: shows an embodiment of the fuel cell with a heating device;
- Fig. 7: shows a temperature development of the fuel cell arrangement according to an embodiment of the invention compared to the comparative fuel cell arrangement;
- Fig. 8: shows a development of a power delivered by the fuel cell arrangement according to an embodiment of the invention compared to the comparative fuel cell arrangement; and
- Fig. 9: shows another development of the power delivered by the fuel cell arrangement according to an embodiment of the invention compared to the comparative fuel cell arrangement.

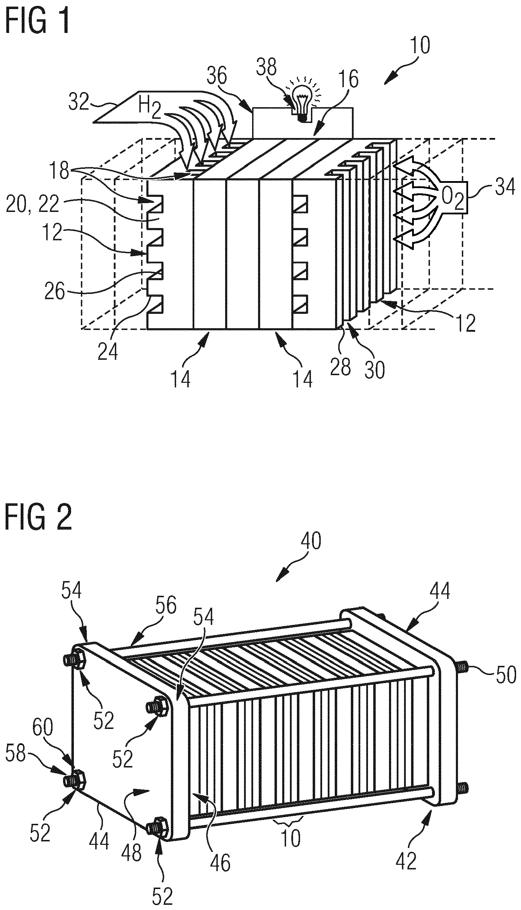

Fig. 1 shows a comparative embodiment of a fuel cell 10.

The fuel cell 10 includes two bipolar plates 12, electrodes 14 in form of an anode and a cathode, and a membrane 16.

The bipolar plates 12 respectively include two opposite, active surfaces 18 and two pairs of opposite sides 20 building a perimeter 22 of the bipolar plate 12.

A plate structure 24 is respectively arranged on the active surfaces 18. The plate structure 24 includes one or more gas diffusion channels 26 in form of protrusions 28 and recesses 30 which are configured to distribute hydrogen 32 and air or oxygen 34.

In operation of the fuel cell 10, hydrogen 32 is entered through the gas diffusion channels 26 of the left bipolar plate 12 in the figure, while air or oxygen 34 is entered through the gas diffusion channels 26 of the right bipolar plate 12 in the figure. An electrochemical process between hydrogen 32 and oxygen 34 results into electron flow in an electrical circuit 36 bridging the two electrodes 14 that can operate an electrical consumer 38. Further results are heat as well as water.

Fig. 2 shows a comparative embodiment of a fuel cell arrangement 40.

The fuel cell arrangement 40 includes a plurality of fuel cells 10.

The fuel cells 10 are stacked one next to another. The fuel cells 10 are placed in series, i.e., the voltages of the individual fuel cells 10 are added.

The fuel cell arrangement 40 further includes a clamp device 42 for clamping the plurality of fuel cells 10 together.

In the embodiment shown in Fig. 2, the clamp device 42 includes two end plates 44. The end plates 44 have a rectangular shape with an inner surface 46 and an outer surface 48. The surfaces 46, 48 of the end plates 44 are in dimension larger than the fuel cells 10. The surfaces 46, 48 may include gas diffusion channels 26.

The end plates 44 are connected to each other. One, but within the scope of the invention not necessarily only way to achieve this, is by a screw-nut connection 50.

Therefore, the end plates 44 include four pre-drilled through-holes 52 arranged in each corner 54 of the end plates 44. However, any other number or arrangement of the through-holes 52 may be possible.

Further, the clamp device 42 includes four tension rods 56. The tension rods 56 extend over the plurality of fuel cells 10 and respectively have threaded portions 58.

The tension rods 56 respectively penetrate through the through-holes 52 of the end plates 44 and are secured by nuts 60 on the threaded portion 58 at the outer surface 48 of both end plates 44. The tension rods 56 thus display constant tensile stress, whereas the fuel cells 10 remain under compressive stress in order to preclude/minimize leakage of gas/liquid from the plurality of stacked fuel cells 10.

The plurality of fuel cells 10 is thus clamped between the two end plates 44. The function of the end plates 44 is thus to provide clamping pressure on the individual fuel cells 10.

The plurality of fuel cells 10 in the fuel cell arrangement 40 may operate an electrical consumer 38.

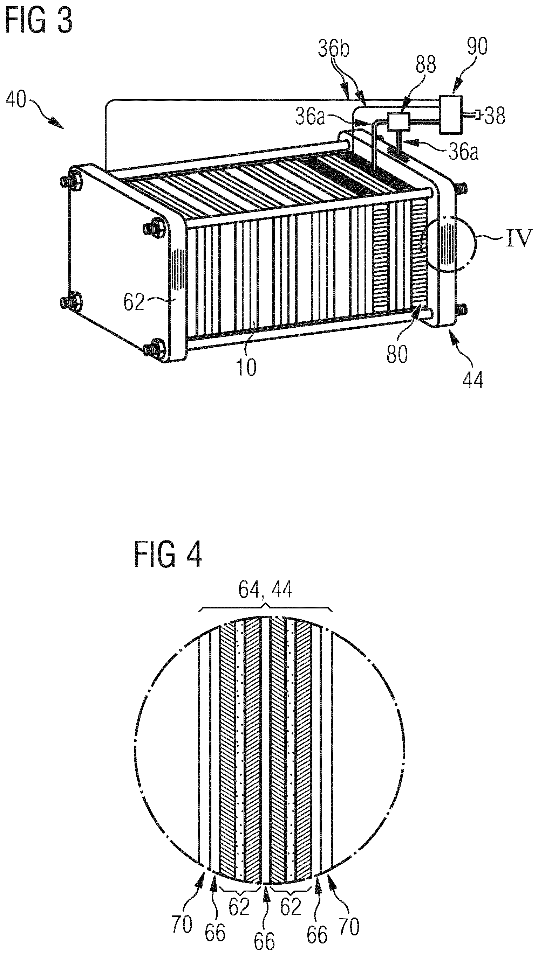

Fig. 3 shows the fuel cell arrangement 40 according to an embodiment of the invention.

The fuel cell arrangement 40 shown in Fig. 3 includes the features of the comparative fuel cell arrangement 40 described with reference to Fig. 2.

Additionally, the end plates 44 according to an embodiment of the invention include each at least one integrated storage device 62 for storing electrical energy.

A portion of the end plate 44 is shown in Fig. 4.

In the example shown in Fig. 4, the end plate 44 is made of a carbon fiber reinforced polymer 64. Further, the end plate 44 includes a plurality of integrated storage devices 62.

The integrated storage devices 62 are arranged in plies adjacent to each other. Electrically conductive current collectors 66 are arranged between adjacent integrated storage devices 62.

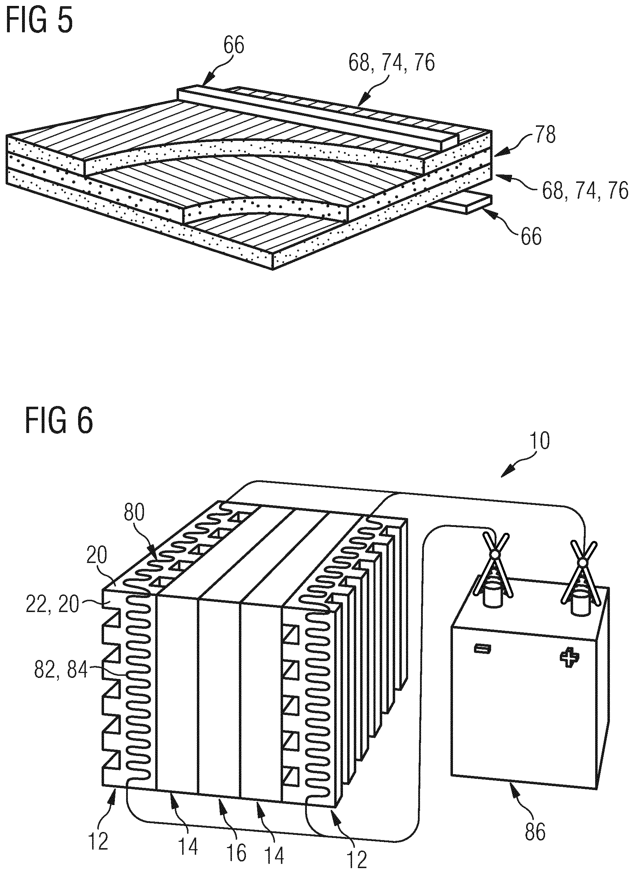

One of the integrated storage devices 62 is shown in Fig. 5.

The integrated storage device 62 includes two electrode plies 68. The electrode plies 68 include carbon fibers 74. The carbon fibers 74 are coated with a compound 76 of lithium ions. In this case, the compound 76 of lithium ions is LiFePO₄.

The electrode plies 68 are separated by a separator ply 78. The separator ply 78 is made of glass fiber reinforced polymer 70.

In the end plate 44 according to Fig. 4, the electrically conductive current collectors 66 are respectively connected to the electrode plies 68 of adjacent integrated storage devices 62. The electrically conductive current collector 66 is configured for collecting current from the electrode plies 68. The plurality of integrated storage devices 62 and the electrically conductive collectors 66 are enclosed by a glass fiber reinforced polymer 70.

Reference is made again to Fig. 3.

Each of the plurality of fuel cells 10 include a heating device 80 producing heat when fed with electrical energy. However, within the scope of the invention, the heating devices 80 may also be omitted.

The fuel cell 10 with heating device 80 is shown in Fig. 6.

The fuel cell 10 shown in Fig. 6 includes the features of the comparative fuel cell 10 described with reference to Fig. 1.

Additionally, the bipolar plates 12 respectively include the heating device 80. In the present case, the heating device 80 includes a heating spiral 82 in form of a metallic wire 84.

The metallic wire 84 is attached to each bipolar plate 12 at the perimeter 22 thereof. In the present case, the metallic wire 84 is attached to the sides 20 of the bipolar plates 12. In other words, the metallic wire 84 is attached around the bipolar plates 12.

In Fig. 6, the heating spiral 82 is exemplarily electrically connected to a power supply 86. When power is supplied to the heating spiral 82, the metallic wire 84 is heated. The heating spiral 82 raises the temperature of the components of the fuel cell 10 by Joule effect.

At cold start of the fuel cell 10, it takes considerable time to reach an operating temperature To compared with, e.g., an electric motor. The heating spiral 82 can improve the cold start behaviour of the fuel cell 10 by introducing heat into the fuel cell 10.

Reference is made again to Fig. 3.

The integrated storage devices 62 of the end plates 44 and the heating devices 80 are electrically connected to a first electronic controlling switch 88 building a first electrical circuit 36a. The plurality of fuel cells 10 is connected a second electronic switch 88 building a second electrical circuit 36b. Further, the first electronic controlling switch 88 is connected to the second electronic controlling switch 90. The second electronic controlling switch 90 is connected to the electrical consumer 38.

According to an embodiment of the present invention, the function of the end plates 44 may be manifold. In addition to providing clamping pressure on the individual fuel cells 10 in accordance with the comparative fuel cell arrangement 40 according to Fig. 2, the end plates 44 may have one or both of the following functions:
First, the end plates 44 may be configured to feed the heating devices 80 with electrical energy that is stored in the integrated storage devices 62.
Second, the end plates 44 may be configured to assist the plurality of fuel cells 10 in operating the electrical consumer 38. This is achieved by a connection of the end plates 44 with the electrical consumer 38, in the present case by the connection of the first electronic switch 88 to the second electronic switch 90 that is connected to the electrical consumer 38.

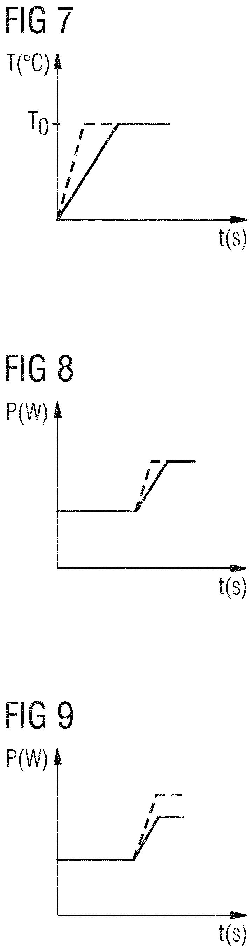

The effect of the first function is displayed in Fig. 7 and Fig. 8.

Fig. 7 shows a temperature development of the fuel cell arrangement 40 according to Fig. 3 compared to the comparative fuel cell arrangement according to Fig. 2.

The temperature T of the comparative fuel cell arrangement 40 according to Fig. 2 at cold start is displayed in solid lines, while the temperature T of the fuel cell arrangement 40 according to Fig. 3 at cold start is displayed in dashed lines.

As can be seen, the fuel cell arrangement 40 according to Fig. 3 reaches faster the operating temperature To than the comparative fuel cell arrangement 40 according to Fig. 2.

Fig. 8 shows a development of a power P delivered by the fuel cell arrangement 40 according to Fig. 3 compared to the comparative fuel cell arrangement 40 according to Fig. 2.

The power P of the comparative fuel cell arrangement 40 according to Fig. 2 at cold start is displayed in solid lines, while the power P of the fuel cell arrangement 40 according to Fig. 3 at cold start is displayed in dashed lines.

As can be seen, the fuel cell arrangement 40 according to Fig. 3 reaches faster a maximum power P_{M} and has a shorter response time than the comparative fuel cell arrangement 40 according to Fig. 2.

The effect of the second function is displayed in Fig. 9.

Fig. 9 shows another development of the power P delivered by the fuel cell arrangement 40 according to Fig. 3 compared to the comparative fuel cell arrangement 40 according to Fig. 2.

In this case, a sudden demand of power P appears and a higher power P is needed than provided by the plurality of fuel cells 10 alone.

As can be seen, the fuel cell arrangement 40 according to Fig. 3 reaches faster the maximum power P_{M} than the comparative fuel cell arrangement 40 according to Fig. 2. Additionally, the maximum power P_{M} delivered by the fuel cell arrangement 40 according to Fig. 3 is higher than the maximum power P_{M} delivered by the comparative fuel cell arrangement 40 according to Fig. 2.

Thus, the integrated storage devices 62 of the end plates 44 in the fuel cell arrangement 40 assist not only by a shorter response time, but also with an increased maximum power P_{M}.

The short distance between the integrated storage devices 62, i.e., the structural batteries located in the end plates 44, to the consumers, i.e., the heating devices 80 (heating spirals 82 around the bipolar plates 12 in the plurality of fuel cells 10) and/or the electrical consumer 38 (complementing the bridged circuit, i.e., the second electrical circuit 36b, providing energy to main consumer) results in a very small electrical resistance.

The integrated storage devices 62 can be recharged from externally and/or during operation of the electrical consumer 38 by the fuel cell arrangement 40 at times of no peak demand of power P.

For example, the structural batteries of a fuel cell stack operating a propulsion system 92 of an aircraft 94 can be recharged at ground with green energy or during operation of the propulsion system 92 in-flight at times of no peak demand of power P.

According to the invention, a multi-functional end plate 44 is provided. For instance, the end plate 44 has a structural function as well as a function of storing electrical energy. In a fuel cell arrangement 40, the end plate 44 may clamp one or more fuel cells 10.

### List of reference signs:

- 10: fuel cell
- 12: bipolar plate
- 14: electrode
- 16: membrane
- 18: active surface
- 20: side
- 22: perimeter
- 24: plate structure
- 26: gas diffusion channel
- 28: protrusion
- 30: recess
- 32: hydrogen
- 34: air/oxygen
- 36: electrical circuit
- 36a: first electrical circuit
- 36b: second electrical circuit
- 38: electrical consumer
- 40: fuel cell arrangement
- 42: clamp device
- 44: end plate
- 46: inner surface
- 48: outer surface
- 50: screw-nut connection
- 52: through-hole
- 54: corner
- 56: tension rod
- 58: threaded portion
- 60: nut
- 62: integrated storage device
- 64: carbon fiber reinforced polymer
- 66: electrically conductive current collector
- 68: electrode ply
- 70: glass fiber reinforced polymer
- 74: carbon fiber
- 76: compound
- 78: separator ply
- 80: heating device
- 82: heating spiral
- 84: metallic wire
- 86: power supply
- 88: first electronic switch
- 90: second electronic switch
- 92: propulsion system
- 94: aircraft

- T: temperature
- To: operating temperature
- P: power
- P_{M}: maximum power

## Claims

1. An end plate (44) for clamping one or more fuel cells (10) in a fuel cell arrangement (40), the end plate (44) including one or more integrated storage devices (62) for storing electrical energy.

2. The end plate (44) according to claim 1, the end plate (44) being made of a carbon fiber reinforced polymer (64).

3. The end plate (44) according to claim 1 or 2, wherein the integrated storage device (62) includes two electrode plies (68) separated by a separator ply (78).

4. The end plate (44) according to claim 3, wherein at least one of the electrode plies (68) include one or more carbon fibers (74).

5. The end plate (44) according to claim 4, wherein the one or more carbon fibers (74) are coated with a compound (76) of lithium ions.

6. The end plate (44) according to any of the claims 3 to 5, wherein the separator ply (78) includes a glass fiber reinforced polymer (70).

7. The end plate (44) according to any of the claims 3 to 6, wherein an electrically conductive current collector (66) is connected to at least one of the electrode plies (68) for collecting current from the electrode ply (68); and/or wherein the end plate (44) includes a plurality of integrated storage devices (62) and electrically conductive current collectors (66) are arranged between adjacent integrated storage devices (62) and respectively connected to electrode plies (68) thereof.

8. The end plate (44) according to any of the preceding claims, wherein at least one surface (46, 48) of the end plate (44) includes one or more gas diffusion channels (26) for diffusing gas in a fuel cell (10).

9. A fuel cell arrangement (40) including one or more fuel cells (10) and a clamp device (42) for clamping the one or more fuel cells (10), the clamp device (42) having an end plate (44) according to any of the preceding claims, the end plate (44) clamping the one or more fuel cells (10).

10. The fuel cell arrangement (40) according to claim 9, wherein the one or more fuel cells (10) respectively includes a heating device (80) producing heat when fed with electrical energy.

11. The fuel cell arrangement (40) according to claim 10, wherein the heating device (80) includes a heating spiral (82) attached to a perimeter (22) of a bipolar plate (12) of the one or more fuel cells (10).

12. The fuel cell arrangement (40) according to claim 10 or 11, wherein the end plate (44) is configured to feed the heating device (80) with electrical energy stored in the integrated storage device (62); and/or the end plate (44) is configured to assist the one or more fuel cells (10) in operating an electrical consumer (38).

13. The fuel cell arrangement (40) according to any of claims 9 to 12, wherein the one or more of fuel cells (10) are electrically connected to the end plate (44) for charging the integrated storage (62) device with electrical energy produced in the fuel cell (10).

14. The fuel cell arrangement (40) according to any of claims 9 to 13, wherein the clamp device (42) includes two end plates (44) according to any of the claims 1 to 8, the one or more fuel cells (10) being clamped between the two end plates (44).

15. The fuel cell arrangement according to claim 14, wherein the clamp device (42) includes a tension rod (56), the tension rod (56) connecting the end plates (44) and/or penetrating through a through-hole (52) of each of the end plates (44).
